**Europäisches Patentamt**

**European Patent Office**

**Office européen des brevets**

(11) Publication number:

**0 326 028**

**A2**

# EUROPEAN PATENT APPLICATION

(21) Application number: **89100939.1**

(22) Date of filing: **20.01.89**

(51) Int. Cl.⁴: **H01H 35/34 , B60C 23/04**

(30) Priority: **25.01.88 IT 6704288**

(43) Date of publication of application:
**02.08.89 Bulletin 89/31**

(84) Designated Contracting States:
**DE ES FR GB**

(71) Applicant: **URMET S.p.A. Costruzioni
Elettro-Telefoniche
·Via Bologna 188/C
I-10154 Torino(IT)**

(72) Inventor: **Mondardini, Massimo
Via Mazzini, 40
I-10123 Torino(IT)**

(74) Representative: **Modiano, Guido et al
MODIANO, JOSIF, PISANTY & STAUB
Modiano & Associati Via Meravigli, 16
I-20123 Milan(IT)**

(54) **Pressure switch for tire pressure detection.**

(57) This pressure switch for detecting the maximum and minimum pressure of motor vehicle tires, for relay systems with on-board indication, comprises differential pneumatic switch means (44-45) subject to the nominal inflation pressure stored in a reference cavity (30) of the pressure switch and to the tire pressure repeated in a corresponding comparison cavity (31); the switch means being adapted to selectively close a respective maximum- or minimum-value indication contact upon corresponding variations in the tire pressure with respect to the stored nominal inflation pressure.

Fig. 1

## PRESSURE SWITCH FOR TIRE PRESSURE DETECTION

The present invention relates to a pressure switch for tire pressure detection, and specifically for detecting the maximum and minimum pressure of motor vehicle tires, which is intended to co-operate with transmission systems capable of relaying or repeating a useful signal on board the motor vehicle itself.

Systems for on-board indication of the maximum and minimum values of the pressure of tires are known, based on the transmission, by means of a radio-frequency carrier, of the signal emitted by an electropneumatic detector upon reaching maximum or minimum threshold pressure values by closing corresponding electric contacts.

Currently known detectors - hereafter briefly termed pressure switches - are constituted by electropneumatic tranducers in which the pressure of the tire is balanced by the elastic action of one or more springs acting on corresponding elements having movable electric contacts which are kept separated from respective fixed contacts if the operating pressure is correct and are pushed by the pressure itself or by the action of the elastic means to engage said fixed contacts, so as to produce the · corresponding maximum- or minimum-value indication, when the pressure varies..

The greatest disadvantage of pressure switches of this known type resides in the fact that the inflation pressure is in any case balanced by a spring. In fact, this requires an indispensable preliminary adjustment operation which is generally difficult, and production rejects are rather high in relation to this operation.

For the correct response of the system, the operating range of these known pressure switches is furthermore necessarily limited, as the springs must operate within an adequately narrow region of their stress-deformation characteristic curve and this requires the provision of a vast assortment of pressure switches with different original adjustments adapted to the different types of tire.

Other disadvantages of known pressure switches reside in their considerable structural complexity, which negatively affects their dimensions, production costs and reliability in operation, and in the fact that due to this structural complexity, the adjustment can significantly vary, in the operating state, also as an effect of inertial actions due to centrifugal forces. This takes to arrange the pressure switches as close as possible to the axis of the wheel, with the consequent need to resort to connecting pipes inserted between the pressure switch and the tire inflation valve, to the further detriment of the operational reliability of the system.

The aim of the present invention is essentially to eliminate these severe disadvantages and, within this general aim, it has the following important particular object: to provide a pressure switch which requires no adjustment, has an extremely wide operating range -comprised for example between 2 and 15 bar - and is therefore suitable for any type of tire both for cars and for freight or special vehicles, allows to set any ratio between the values of the maximum and minimum thresholds in that said thresholds can be preset independently and set in any way, has an extremely simplified structure with consequent extremely high reliability in operation, requires no connecting element for coupling to the tire of the vehicle.

In order to achieve this aim, this important object and others which will become apparent from the following detailed description, the present invention relates to a pressure switch for tire pressure detection, as defined in the appended claim 1.

Further objects, the characteristics and advantages of the present invention will become apparent from the following detailed description and with reference to the accompanying drawings, given by way of non-limitative example, wherein:

figure 1 is an axial sectional view of the pressure switch according to a preferred embodiment of the invention;

figure 2 is a partial axial sectional view similar to figure 1, illustrating the transient configuration of the pressure switch during the inflation pressure storage step;

figure 3 is a transverse sectional view taken along the line III-III of figure 1;

figure 4 is a longitudinal sectional view taken along the line IV-IV of figure 3.

The pressure switch according to the present invention is essentially constituted by a hollow cylindrical body 10 ending on one side with a threaded seat 11 adapted to sealingly screw on the correspondingly threaded terminal portion of the tire valve, from which the respective shutter is removed beforehand. On the other side the body 10 has an outer threaded portion 12 intended to receive the valve cap 13 and the valve shutter 14 accommodated in the axial cavity 15 of the body 10 in replacement of the one removed from the tire valve.

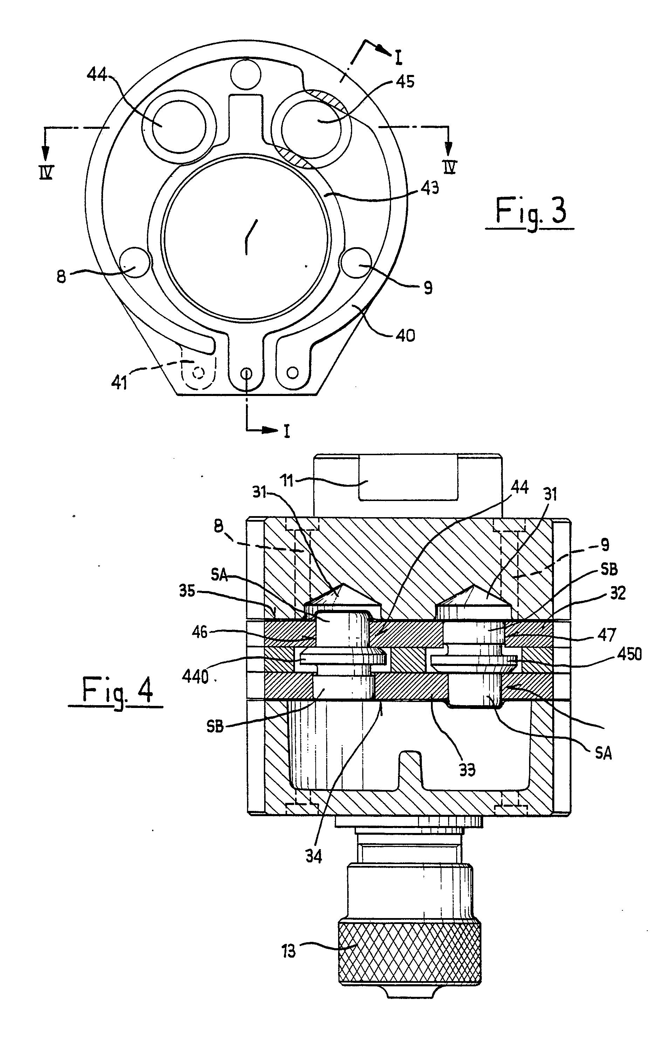

A cylinder 20 is fitted air-tight and axially movable on the body 10 and acts as a valve; said cylinder is formed by two facing portions 200-201 connected by tie rods 8 and 9 (see fig. 3). The cylinder 20 is movable in two axial positions limited by a stop ring 21 and respectively by an abutment

· 22 having a truncated-cone profile and arranged at the end of the body 10.

A pair of annular gaskets 22-23 of the O-ring type is interposed between the body 10 and the cylinder 20 to provide an outward pneumatic seal.

A third gasket 24 of the same type is accommodated at the center of the body 10 for the purpose which is specified hereafter. An annular chamber 25 is delimited between the body 10 and the cylinder 20 and communicates, by means of a radial duct 26, with the axial cavity 15 of the body 10.

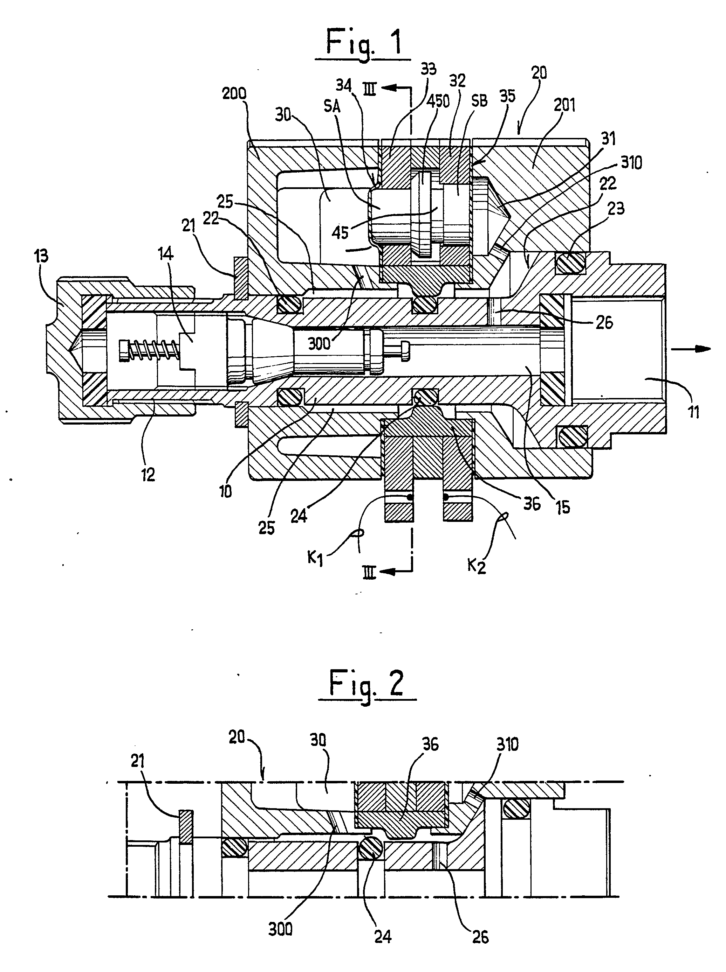

A reference cavity 30 and a comparison cavity 31 are delimited in the cylinder 20 and are separated in an air-tight manner by a pair of plates 32-33 of electrically insulating material co-operating with corresponding elastomer membranes 34-35 and interposed between the cylinder portions 200-201. The reference cavity 30 and the comparison cavity 31 both communicate, by means of ducts 300,310, with the chamber 25 but on opposite sides with respect to the gasket 24 arranged at the center of said chamber. Said gasket is sealingly engaged by a protruding ring 36 of the cylinder 20 which delimits two spaces separated from one another in an air-tight manner in the chamber 25 when said cylinder abuts against the stop 21 (figure 1).

Electrically conducting paths 40 and 41 are provided on the inner faces of the insulating plates 32-33 (see fig. 3); said paths have terminals for connecting respective electric cables K1-K2 and are intended to be selectively engaged by one piston or the other of a pair of small electrically conducting pistons 44 and 45 provided with corresponding and complementary contact collars 440 and 450 in order to close the galvanic contact on a corresponding central path 43 connected to the ground. The small pistons 44 and 45 are freely slidable in corresponding seats 46 and 47 of the plates 32-33 and are subject to the differential pressure of the reference cavity 30 and of the comparison cavity 31. For this reason each has pneumatically useful cross sections SA-SB the diameters whereof differ by a preset ratio corresponding to the tolerance ratio required for the maximum- or minimum-pressure indication. It should be noted that this ratio can be different for the two pistons in order to obtain corresponding different and independent tolerance ratios for the two indications of maximum and minimum pressure.

The piston 44 intended to close the maximum-pressure indication contact naturally has its reduced cross section SA directed towards the comparison cavity 31, and the piston 45 for indicating the minimum pressure vice versa has its reduced cross section SA directed towards the reference cavity 30. Assume, for example, that the tolerance ratio is chosen equal to ± 1/4 of the nominal pressure (equal both for maximum and minimum): the pneumatically useful cross sections SA-SB of the pistons have a size ratio of 1.25, so that if the nominal pressure is for example 4 bar, the minimum tolerated pressure is 4/1.25 = 3.2 bar and the maximum one is equal to 4 x 1.25 = 5 bar.

The operation of the described pressure switch is as follows: after screwing the body 10 on the tire valve, said tire is inflated after first moving the cylinder 20 to the end of its stroke against the abutment 22 as illustrated in figure 2. In this manner the air - through the radial duct 26, the chamber 25, the ducts 300 and 310 - reaches both cavities 30 and 31. Once the nominal inflation pressure has been reached, the cylinder 20 is moved on the opposite side making it abut against the stop ring 21 (figure 1), and the reference cavity 30 in which the nominal inflation pressure is stored is thus isolated. On the other hand, the pressure in the comparison cavity 31 directly connected to the tire will undergo the same variations occurring inside the tire and the resulting differential of the compared pressures moves one or the other of the pistons 44 and 45 when the positive or negative variation of the inflation pressure exceeds the preset tolerance ratio.

Though the concept of the invention remains invariant, the details of execution and the embodiments may be extensively varied with respect to what is described and illustrated by way of non-limitative example without thereby abandoning the scope of the invention.

In particular if the device is intended to work with very high operating pressures, the introduction and storage of the air in the reference cavity may be controlled by a shutter-like valve means, for example a valve with a conical needle shutter controlled by an opening and closure screw.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A pressure switch for tire pressure detection, characterized in that it comprises differential pneumatic switch means (44,45), subject to the nominal inflation pressure stored in a reference cavity (30) of the pressure switch and to the tire pressure repeated in a corresponding comparison cavity (31); said switch means being adapted to selectively close a respective maximum- or minimum-value indication contact (40,41) upon corresponding variations in the tire pressure with respect to the stored nominal inflation pressure.

2. A pressure switch according to claim 1, characterized in that said reference cavity (30) is subject to filling and closure means (15,25,300,24,36) adapted to allow the introduction of air at the nominal inflation pressure of the tire in the reference cavity and to prevent its escape in order to store said nominal pressure.

3. A pressure switch according to claims 1 and 2, characterized in that said differential switch means comprise a pair of electrically conducting pistons (44,45) having pneumatically useful cross sections (SA,SB) subject to the differential pressure of the reference and comparison cavities (30,31).

4. A pressure switch according to claim 3, characterized in that said pistons (44,45) are freely slidable in respective seats (46,47) of a wall (32,33) which separates the two reference and comparison cavities (30.31) in an air-tight manner and in that their pneumatically useful cross sections (SA,SB), facing one and the other cavities, have dimensions according to the preselected tolerance ratios of the maximum and minimum pressure values.

5. A pressure switch according to claims 1 to 4, characterized in that said reference and comparison cavities (30,31) are provided within a valve cylinder (20) which is axially movable, in relation to the body (10) of the pressure switch, in two positions which are limited by stops and respectively correspond to the communication between the inflation duct and the reference cavity and the air-tight closure of said reference cavity (30).

6. A pressure switch according to claims 1 and 5, characterized in that it comprises an axially hollow cylindrical body (10) with a terminal seat (11) for screwing it on the tire valve, a threaded portion (12) intended to receive the valve cap (13) and a valve shutter (14) accommodated in the axial cavity (15); a valve cylinder fitted freely slidable on said body and movable with respect to said body in two axial positions limited by stops; an annular chamber (25) comprised between said body (10) and said cylinder (20) and connected by means of respective ducts (26,300,310) to the axial cavity of the pressure switch body and to the reference and comparison cavities (30,31), and means (36,24) for sealingly separating, in relation to the position of the valve cylinder (20), two portions of said annular chamber respectively connected to the reference cavity (30) and the comparison cavity (31) provided inside said cylinder.

7. A pressure switch according to claim 6, characterized in that said means for separating the annular chamber (25) into two portions comprise a gasket (24) centrally supported by the body (10) of the pressure switch and adapted to be engaged by a protruding ring (36) of the cylinder, and in that the sealing engagement between said ring and said gasket occurs, in order to close the reference cavity (30), at one of the two axial positions of the cylinder (20); the other axial position of the cylinder connecting said reference cavity (30) and the axial cavity (15) of the pressure switch body to fill said reference cavity with the inflation air.

8. A pressure switch according to the preceding claims, characterized in that the wall which sealingly separates the reference and comparison cavities (30,31) is formed by two spaced-apart plates (32,33), each whereof has, on its inner face, electrically conducting paths (41,40) adapted to be engaged by the conducting collar (440,450) of a respective one of said pistons (44,45) in order to close the galvanic signaling contact, and in that corresponding membranes (34,35) of elastomer material co-operate with the outer faces of said plates to provide an air-tight seal.

## Fig. 1

## Fig. 2

Fig. 3

Fig. 4